# EUROPEAN PATENT APPLICATION

(11) **EP 4 418 803 A1**
(43) Date of publication of application: **21.08.2024**
(21) Application number: 24158162.8
(22) Date of filing: 16.02.2024
(51) Int. Cl.: H04W 76/18, H04W 48/04, H04W 60/06

(54) **METHODS AND SYSTEMS FOR SERVICE RECOVERY IN WIRELESS COMMUNICATION NETWORK**

(30) Priority: 18.02.2023 IN 202341011177
(71) Applicant: Samsung Electronics Co., Ltd., Suwon-si, Gyeonggi-do 16677 (KR)
(72) Inventor: COMARAVELOU, Sivasankar, Bengaluru (IN); DANDRA, Prasad Basavaraj, Bengaluru (IN); GANIG, Chetan Ramesh, Bengaluru (IN); KUMAR, Lalith, Bengaluru (IN); KARAMSETTI, Venkata Anil Kumar, Bengaluru (IN)
(74) Representative: Marks & Clerk LLP

(57) **Abstract**

A method implemented in a User Equipment (UE) for service recovery in a wireless communication network includes establishing a first Radio Resource Control (RRC) connection with a Public Land Mobile Network (PLMN) via a first cell corresponding to a network, transmitting, to the network, a Protocol Data Unit (PDU) establishment request for a service from the first cell using the first RRC connection, receiving, from the network in response to the PDU establishment request, a PDU establishment failure message based on at least location information of the UE, performing a local deregistration with the first cell based on the PDU establishment failure message, and establishing a second RRC connection with the PLMN via a second cell corresponding to the network.

## Description

### TECHNICAL FIELD

The present disclosure generally relates to wireless communication networks, and more particularly to methods and systems for service recovery in a wireless communication network.

### BACKGROUND

5th Generation systems (5GSs) support Third Generation Partnership Project satellite Next Generation Radio Access Network (3GPP satellite NG-RAN) access technology that helps to facilitate 5G services in unserved or underserved areas, enhancing the performance of terrestrial networks. This reinforces service reliability by providing continuous service for a User Equipment (UE) or moving platforms (e.g., passenger vehicles, aircraft, ships, high-speed trains, buses, etc.). It also increases service availability, especially for critical communications such as railways, maritime, and aeronautical communications. Satellite NG-RAN further enables 5G network scalability through the provision of efficient multicast/broadcast resources for data delivery toward network edges or even directly to the UE.

However, there exist a few challenges while implementing Protocol Data Unit (PDU) services through NG-RAN satellite access. Specifically, when PDU services are rejected in the NG-RAN satellite access in the Downlink Non-Access Stratum (DL NAS) message due to the location of the UE with a cause #78 of 5G Mobility Management (5GMM), the UE is not allowed to try for services in same Public Land Mobile Network (PLMN) until the UE is de-registered from the PLMN. Moreover, while handling cause #78, if a network fails to release the signaling connection with the UE, the UE is stuck in a connected mode for a longer duration.

### SUMMARY

This summary is provided to introduce a selection of concepts in a simplified format that are further described in the detailed description. Embodiments address the above-mentioned challenges in NG-RAN satellite access by, for example, providing methods and systems for effective and efficient service recovery in a wireless communication network.

According to embodiments of the present disclosure, a method implemented in a User Equipment (UE) for service recovery in a wireless communication network is disclosed. The method includes establishing a first Radio Resource Control (RRC) connection with a first Public Land Mobile Network (PLMN) via a first cell corresponding to a network, transmitting, to the network, one of Protocol Data Unit (PDU) establishment request or a registration request for a service from the first cell using the first RRC connection, receiving, from the network in response to the one of Protocol Data Unit (PDU) establishment request or a registration request, one of a PDU establishment failure message or a registration reject message based on at least location information of the UE, and establishing a second RRC connection with the PLMN via a second cell of one of another network or a second PLMN via the first cell corresponding to the network.

According to embodiments of the present disclosure, a method implemented in a User Equipment (UE) for service recovery in a wireless communication network is disclosed. The method includes establishing a Radio Resource Control (RRC) connection with a Public Land Mobile Network (PLMN) via a first cell corresponding to a network, transmitting, to the network, a Protocol Data Unit (PDU) establishment request for a service from the first cell using the RRC connection, receiving, from the network in response to the PDU establishment request, a PDU establishment failure message based on at least location information of the UE, and performing one or more other pending uplink signaling services with the first cell.

According to embodiments of the present disclosure, a method implemented in a User Equipment (UE) for service recovery in a wireless communication network is disclosed. The method includes establishing a first Radio Resource Control (RRC) connection with a Public Land Mobile Network (PLMN) via a first cell corresponding to a network, transmitting, to the network, a REGISTRATION REQUEST for a service from the first cell using the first RRC connection, receiving, from the network in response to the REGISTRATION REQUEST, a REGISTRATION REJECT message based on at least location information of the UE, initializing a timer and waiting for the network to release the first RRC connection with the first cell, performing local release of the first RRC connection in response to determining the first RRC connection has not been released by the network by expiry of the timer, and establishing a second RRC connection with the PLMN using a second cell of the network.

According to embodiments of the present disclosure, a method implemented in a User Equipment (UE) for service recovery in a wireless communication network is disclosed. The method includes establishing a first Radio Resource Control (RRC) connection with a first Public Land Mobile Network (PLMN) via a Next Generation-Radio Access Network (NG-RAN) satellite cell corresponding to a network, transmitting, to the network, a Protocol Data Unit (PDU) establishment request for a service via the NG-RAN satellite cell, receiving, from the network in response to the PDU establishment request, a PDU establishment failure message based on at least location information of the UE, and performing a PLMN selection in response to the PDU establishment failure message to establish a second RRC connection with a second PLMN.

According to embodiments of the present disclosure, a system for service recovery at a User Equipment (UE) in a wireless communication network is disclosed. The system includes processing circuitry configured to establish a first Radio Resource Control (RRC) connection with a first Public Land Mobile Network (PLMN) via a first cell corresponding to a network, transmit, to the network, one of a Protocol Data Unit (PDU) establishment request or a registration request for a service from the first cell using the first RRC connection, receive, from the network in response to the one of Protocol Data Unit (PDU) establishment request or a registration request, one of a PDU establishment failure message or a registration reject message based on at least location information of the UE, and establish a second RRC connection with the PLMN via a second cell of one of another network or a second PLMN via the first cell corresponding to the network.

According to embodiments of the present disclosure, a system for service recovery at a User Equipment (UE) in a wireless communication network is disclosed. The system includes processing circuitry configured to establish a Radio Resource Control (RRC) connection with a Public Land Mobile Network (PLMN) via a first cell corresponding to a network, transmit, to the network, a Protocol Data Unit (PDU) establishment request for a service from the first cell using the RRC connection, receive, from the network in response to the PDU establishment request, a PDU establishment failure message based on at least location information of the UE, and perform one or more other pending uplink signaling services with the first cell.

According to embodiments of the present disclosure, a system for service recovery at a User Equipment (UE) in a wireless communication network is disclosed. The system includes processing circuitry configured to establish a first Radio Resource Control (RRC) connection with a Public Land Mobile Network (PLMN) via a first cell corresponding to a network, transmit, to the network, a Protocol Data Unit (PDU) establishment request for a service from the first cell using the first RRC connection, receive, from the network in response to the PDU establishment request, a PDU establishment failure message based on at least location information of the UE, initialize a timer and wait for the network to release the first RRC connection, performing local release of the first RRC connection in response to determining the first RRC connection has not been released by the network by expiry of the timer, and establish a second RRC connection with the PLMN using a second cell of the network, the second RRC connection being for recovery of the service.

According to embodiments of the present disclosure, a system for service recovery at a User Equipment (UE) in a wireless communication network is disclosed. The system includes processing circuitry configured to establish a first Radio Resource Control (RRC) connection with a first Public Land Mobile Network (PLMN) via a Next Generation-Radio Access Network (NG-RAN) satellite cell corresponding to a network, transmit, to the network, a REGISTRATION REQUEST for a service from the NG-RAN satellite cell, receive, from the network in response to the REGISTRATION REQUEST, a REGISTRATION REJECT message based on at least location information of the UE, and perform a PLMN selection in response to the REGISTRATION REJECT message to establish a second RRC connection with a second PLMN.

To further clarify the advantages and features of the inventive concepts, a more particular description will be rendered by reference to specific examples thereof, which are illustrated in the appended drawings. It is appreciated that these drawings depict only typical examples and are therefore not to be considered as limiting the scope of the inventive concepts. Embodiments of the inventive concepts will be described and explained with additional specificity and detail with the accompanying drawings.

At least some of the above and other features of the invention are set out in the claims.

### BRIEF DESCRIPTION OF THE DRAWINGS

These and other features, aspects, and advantages of the inventive concepts will become better understood when the following detailed description is read with reference to the accompanying drawings in which like characters represent like parts throughout the drawings, wherein:
**Figure 1** illustrates a sequence of operations depicting a challenge in a Protocol Data Unit (PDU) session establishment procedure for a service, according to the conventional state of art;
**Figure 2** illustrates a sequence of operations depicting another challenge in the PDU session establishment procedure for a service, according to the conventional state of art;
**Figure 3** illustrates a sequence of operations depicting a method for a PDU session establishment procedure for the service, according to embodiments of the present disclosure;
**Figure 4** illustrates a sequence of operations depicting a method for a PDU session establishment procedure for the service, according to embodiments of the present disclosure;
**Figure 5A** illustrates a sequence of operations depicting a method for a PDU session establishment procedure for the service, according to embodiments of the present disclosure;
**Figure 5B** illustrates a sequence of operations depicting a method for a PDU session establishment procedure for the service, according to embodiments of the present disclosure;
**Figure 6** illustrates a sequence of operations depicting a challenge for signaling release at a User Equipment (UE), according to the conventional state of art;
**Figure 7** illustrates a sequence of operations depicting a method for local release of signaling connection, according to embodiments of the present disclosure;
**Figure 8** illustrates an example process flow depicting a method for service recovery at a User Equipment (UE), according to embodiments of the present disclosure;
**Figure 9** illustrates an example process flow depicting a method for service recovery at the UE, according to embodiments of the present disclosure;
**Figure 10** illustrates an example process flow depicting a method for service recovery at the UE, according embodiments of the present disclosure;
**Figure 11** illustrates an example process flow depicting a method for service recovery at the UE, according to embodiments of the present disclosure;
**Figure 12** illustrates an example diagram of a network, according to embodiments of the present disclosure; and
**Figure 13** is a diagram illustrating the configuration of a UE in a wireless communication system, according to embodiments of the present disclosure.

Further, skilled artisans will appreciate that elements in the drawings are illustrated for simplicity and may not necessarily have been drawn to scale. The flow charts illustrate the method in terms of operations involved to help to improve understanding of aspects of the inventive concepts. Furthermore, in terms of the construction of the device, one or more components of the device may have been represented in the drawings by conventional symbols, and the drawings may show only those specific details that are pertinent to understanding embodiments of the inventive concepts so as not to obscure the drawings with details that will be readily apparent to those of ordinary skill in the art having the benefit of the description herein.

### DETAILED DESCRIPTION

It should be understood at the outset that although illustrative implementations of embodiments of the present disclosure are illustrated below, the inventive concepts may be implemented using any number of techniques, whether currently known or in existence. The present disclosure should in no way be limited to the illustrative implementations, drawings, and techniques illustrated below, including the example design and implementation illustrated and described herein, but may be modified within the scope of the appended claims along with their full scope of equivalents.

The term "some" as used herein is defined as "one, or more than one, or all." Accordingly, the terms "one," "more than one," "more than one, but not all" or "all" would all fall under the definition of "some." The term "embodiments" may refer to one embodiment or to several embodiments or to all embodiments.

The terminology and structure employed herein is for describing, teaching, and illuminating embodiments and their specific features and elements and does not limit, restrict, or reduce the scope of the claims.

More specifically, any terms used in this description of the embodiments such as but not limited to "includes," "comprises," "has," "consists," and grammatical variants thereof do NOT specify an exact limitation or restriction and certainly do NOT exclude the possible addition of one or more features or elements, unless otherwise stated, and furthermore must NOT be taken to exclude the possible removal of one or more of the listed features and elements, unless otherwise stated with the limiting language "MUST comprise" or "NEEDS TO include."

Whether or not a certain feature or element was limited to being used only once, either way, it may still be referred to as "one or more features" or "one or more elements" or "at least one feature" or "at least one element."

Unless otherwise defined, all terms, and especially any technical and/or scientific terms, used herein may be taken to have the same meaning as, or a similar meaning to, that commonly understood by one having ordinary skill in the art.

Embodiments of the inventive concepts will be described below in detail with reference to the accompanying drawings.

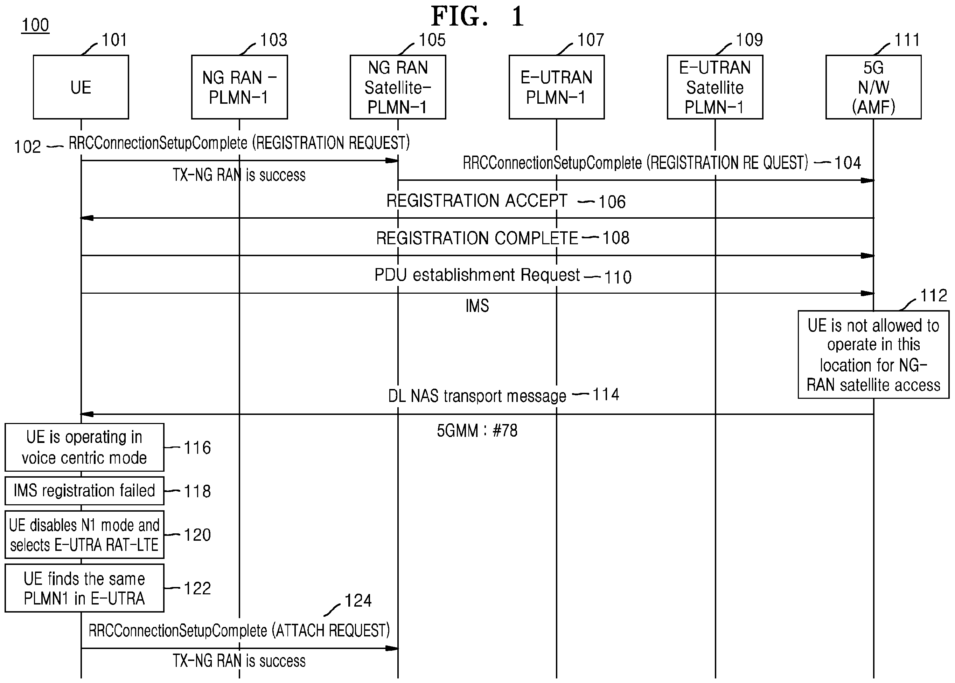

**Figure 1** illustrates a sequence of operations depicting a challenge in a Protocol Data Unit (PDU) session establishment procedure 100 for a service, according to the conventional state of the art. In this scenario, the sequence of operation corresponds to a communication between a User Equipment (UE) 101 and a network 111 (e.g., a 5G network Access and Mobility Management Function). The network 111 may implement a Public Land Mobile Network (PLMN) (for example, PLMN 1) within a specific geographic area. The various other entities involved in the sequence of operations include a Next Generation Radio Access Network (NG-RAN) PLMN-1 103 (hereinafter referred to as the NG-RAN 103, the NG-RAN cell 103 and/or the NG-RAN PLMN-1 103), NG-RAN satellite-PLMN-1 105 (hereinafter referred to as the NG-RAN satellite 105, the NG-RAN satellite cell 105 and/or the NG-RAN satellite-PLMN-1 105), Evolved Universal Terrestrial Radio Access Network (E-UTRAN) PLMN-1 107 (hereinafter referred to as the E-UTRAN 107, the E-UTRAN cell 107 and/or the E-UTRAN PLMN-1 107), and E-UTRAN satellite PLMN-1 109 (hereinafter referred to as the E-UTRAN satellite 109, the E-UTRAN satellite cell 109 and/or the E-UTRAN satellite-PLMN-1 109). Each of the entities e.g., the NG-RAN 103, the NG-RAN satellite 105, the E-UTRAN 107, and the E-UTRAN satellite 109 may be associated with the PLMN-1. Further, each of the NG-RAN 103, the NG-RAN satellite 105, the E-UTRAN 107, and the E-UTRAN satellite 109 may correspond to network accesses as implemented by the network 111. The network 111 may correspond to a network entity referred to as Access and Mobility Management Function (AMF) that may be configured to manage mobility of the UE 101 and handle access authentication. According to examples, each of the NG-RAN 103, the NG-RAN satellite 105, the E-UTRAN 107, and the E-UTRAN satellite 109 may respectively include a corresponding cell.

At operation 102, the UE 101 initializes a Radio Resource Control (RRC) connection with the network 111 via the NG-RAN satellite 105. In particular, the UE 101 may initiate an "RRCConnectionSetupComplete" process by sending a "REGISTRATION REQUEST" message to the NG-RAN satellite 105. At operation 104, the NG-RAN satellite 105 may implement the "RRCConnectionSetupComplete" process by transmitting the received "REGISTRATION REQUEST" message to the network 111. The network 111 may process the received "REGISTRATION REQUEST" message by performing authentication and validation of the received message. Upon successful completion of authentication and validation of the received message, the network 111 may transmit a "REGISTRATION ACCEPT" message to the UE 101 at operation 106 indicating acceptance of a registration request of the UE 101. The network 111 may share an allocation of resources in the "REGISTRATION ACCEPT" message. Operation 108 may represent completion of the registration process e.g., establishment of the RRC connection between the UE 101 and the network 111 via the NG-RAN satellite 105. According to embodiments, operation 108 may include the UE 101 transmitting a "REGISTRATION COMPLETE" message to the network 111.

At operation 110, the UE 101 may initiate a service request by transmitting a Protocol Data Unit (PDU) establishment request to the network 111. For instance, the UE 101 initiates the service request to access IP Multimedia Subsystem (IMS) services.

In response to the received PDU establishment request, the network 111 may determine whether or not the UE 101 is able to access the requested service. For instance, the network 111 may validate UE 101 subscription information and/or other related information prior to providing the requested service to the UE 101. In particular, at operation 112, the network 111 may verify a location of the UE 101 and determine that the UE 101 is not allowed to operate in a location of the NG-RAN satellite 105 (e.g., is not permitted to access the requested service at the location of the UE 101). In one non-limiting embodiment, the network 111 may determines based on a subscription of the UE 101, whether the UE 101 is allowed to operate from a geographical location from which the UE 101 has requested the PDU service. If the UE 101 does not have subscription for the requested service, the network 111 may reject the request from the UE 101. In another non-limiting embodiment, the network 111 may determine service capabilities of the NG-RAN satellite 105 to determine whether the NG-RAN satellite 105 is allowed to support the requested service from the UE 101. Further, if the NG-RAN satellite 105 is not allowed to support the requested service in the geographical location of the UE 101, the network 111 may reject the request from the UE 101. Further, reference is made to section 4.23.2 of spec 24.501.

Thus, at operation 114, the network 111 may transmit a PDU establishment failure message to the UE 101. The PDU establishment failure message may correspond to (e.g., may be or include) a Downlink Non-Access Stratum message (DL-NAS) message with a cause of failure. For instance, the network 111 may respond with PDU not forwarded due to cause #78 of 5G Mobility Management (5GMM).

Following operation 114 the UE 101 is operating in voice centric mode and IMS voice service is set (e.g., configured and/or prioritized, for example, according to a user input and/or internal settings of the UE 101) by the UE 101. At operation 118, the UE 101 may identify that the IMS registration has failed, e.g., that the request for IMS service using the NG-RAN satellite 105 has been rejected by the network 111.

The IMS voice service is not available since the PDU establishment request has been rejected by the network 111. At operation 120, the UE 101 disables N1 mode capabilities for NG-RANs of the current PLMN (e.g., PLMN-1) and directly attempts to search for the same PLMN (or a similar PLMN) in E-UTRAN. At operation 122, the UE 101 identifies the same PLMN (e.g., PLMN-1, or a similar PLMN) in the E-UTRAN. Next, at operation 124, the UE 101 initializes an RRC connection with the E-UTRAN 107 using the "RRCConnectionSetupComplete" function, as discussed above.

Thus, according to the conventional technique discussed above, the UE 101 directly reduces the capacity of the network 111 by connecting to a lower-capability network access, e.g., the E-UTRAN 107, as compared to the NG-RAN satellite 105 (e.g., a higher-capability network). Therefore, the overall performance of the UE 101 degrades with the above-discussed sequence of operations.

In particular, as at operation 114, the UE 101 is rejected with the PDU for IMS, the UE 101 is unable to perform another PDU establishment procedure without performing the de-registration with NG-RAN satellite 105 associated with the PLMN-1. However, when the UE 101 connects with E-UTRAN 107, both the NG-RAN 103 and the NG-RAN satellite 105 are disabled, and no service may be availed from the New Radio (NR). Even when the higher capability network access is available (PLMN1 in NG-RAN), the UE 101 will still connect with lower capability network access (E-UTRAN).

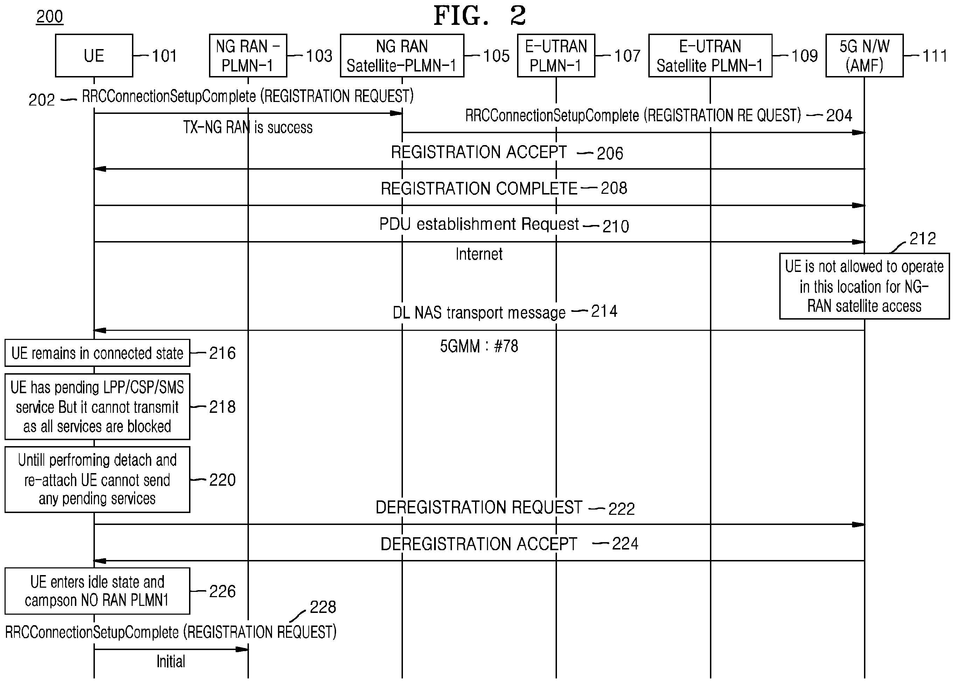

**Figure 2** illustrates a sequence of operations depicting another challenge in the PDU session establishment procedure for a service, according to the conventional state of the art. The operations 202-214 are similar to 102-114 (shown in FIG. 1), respectively, except that at operation 210 the UE 101 has a request for another service, e.g., an internet service. Therefore, a description of the operations 202-214 has been omitted for the sake of brevity.

Following operation 214, the UE 101 remains in the connected state and may have pending services. The pending services may not be internet-based services. However, the UE 101 is unable to transmit as all the services are blocked. The UE 101 is unable to perform the pending services until the UE 101 performs detach procedure. Non-limiting examples of the pending services include LPP (Long-Term Evolution (LTE) Positioning Protocol)-based services, Short Message Service (SMS), and Location Services (LCS).

Also, following operation 214, the UE 101 is unable to send any pending services until performing detach and re-attach (e.g., de-registering the RRC connection with the network 111 and re-registering the RRC connection). The UE 101 is in connected mode and the pending services are available, however, still the UE is unable to send the pending services. This leads to battery power consumption even though no services are being performed.

At operation 222, the UE 101 initiates the de-registration process by transmitting a "DE-REGISTRATION REQUEST" message to the network 111. In one embodiment, the "DE-REGISTRATION REQUEST" message may be triggered from the UE 101 to the network 111 in signaling message to indicate the network 111 that the UE 101 wants to get detached and enter 5GMM-DEREGISTERED state. For example, when a flight mode in the UE 101 is turned ON, the UE 101 may send the deregistration request to network 111. Next, at operation 224, the UE 101 receives a "DE-REGISRATION ACCEPT" message upon successful completion of the deregistration process by the network 111. At operation 226, the UE 101 enters idle state and camps on the PLMN1 associated with the NG RAN.

At operation 228, the UE 101 initializes a RRC connection with the PLMN1 of the NG-RAN. The UE 101 may initiate an "RRCConnectionSetupComplete" process by sending a "REGISTRATION REQUEST" message to the (NG-RAN) PLMN-1 103.

In embodiments, in response to the PDU establishment failure message (e.g., the DL NAS transport message with cause #78) at operation 214, the UE 101 releases N1 NAS signaling due to failure of a lower layer, e.g., releases the NAS connection with N1 interface that allows the UE 101 to access 5G core network via the 5G access network. In embodiments, the UE 101 moves to the NG-RAN 103 (e.g., the NG-RAN associated with the same PLMN or a similar PLMN) by an idle mobility mode and identifies that the pending messages/services still are unable to be performed until the UE 101 performs the de-registration process with the NG-RAN satellite 105 even after moving out from the NG-RAN satellite 105 access cell.

However, the de-registration procedure in the above-mentioned sequence of operations results in a wastage of resources and time, and further degrades user experience with the network. In particular, even after moving from the NG-RAN satellite to the NG-RAN associated with the same PLMN (or a similar PLMN), the UE 101 is not allowed to perform PDU establishment without access technology mapping, e.g., deregistration and registration procedures. Further, the UE 101 is prevented from (or limited with respect to) the transmission of the LPP-based messages, SMS, or other data services specified in subclause 5.4.5.2.1 of TS 24.501 specification in NG-RAN for the same PLMN (or a similar PLMN). Therefore, the sequence of operations as explained in reference to FIG. 2 degrades the performance of both the UE 101 and the network 111.

Also, in case the network 111 does not release the RRC connection in response to the "DE-REGISTRATION REQUEST" message, the UE 101 may be stuck in connected mode wasting battery power and network resources.

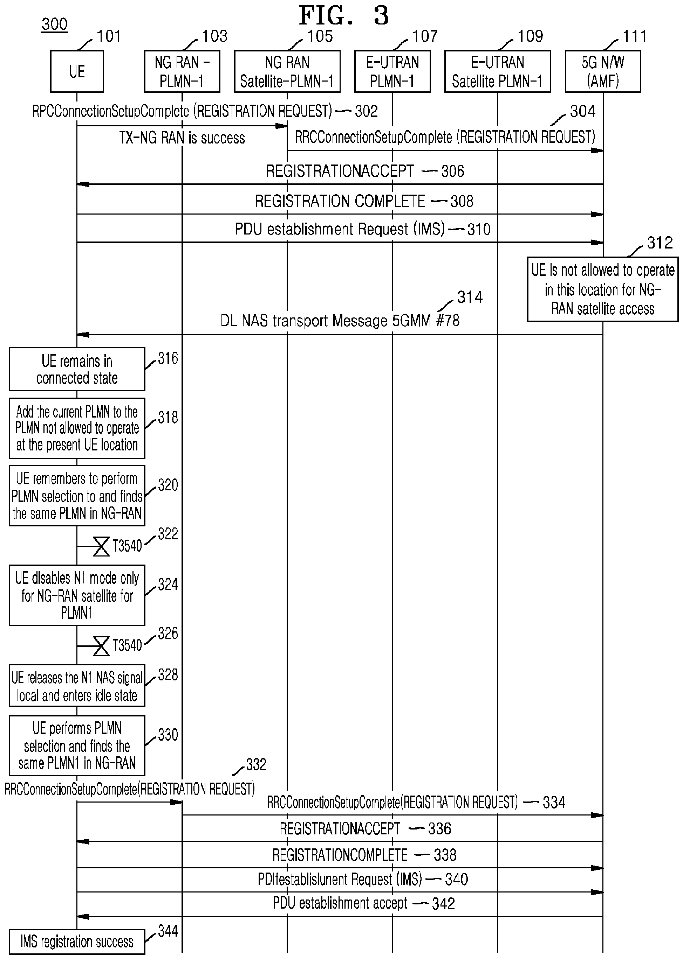

**Figure 3** illustrates a sequence of operations depicting a method 300 for a PDU session establishment procedure for a service, according to embodiments of the present disclosure. In embodiments, the method 300 provides a solution to one or more challenges illustrated in FIG. 1.

Operations 302-314 relate to the establishment of the RRC connection of the UE 101 with the NG-RAN satellite 105, and the failure of the PDU establishment procedure, as explained in reference to operations 102-114 (shown in FIG. 1), respectively. Accordingly, a detailed description of the operations 302-314 has been omitted for the sake of brevity. In operation 310, the PDU establishment request may be for IMS service.

At operation 316, the UE 101 performs local de-registration with the NG-RAN satellite 105 in response to the PDU establishment failure message, as received at operation 312. In one non-limiting embodiment, the local deregistration performed by the UE 101 with the NG-RAN satellite 105 may refer to a case where network does not require any signaling to be updated to know the UE 101 is going to be de-registered state. The UE 101 may internally update its state from 5GMM.REGISTERED-> 5GMM.DEREGISTERED. Further, the UE 101 may clear the 5GMM registered context and initiate new registration to get services. Further reference is made to Figure 5.1.3.2.1.1.1: 5GMM main states in the UE in spec 24.501. And for an example scenario refer to case f - 2 of section 5.5.2.2.6 in spec 24.501 for usage of local De-registration.

The UE does not wait in a connected state or a registered state (e.g., the UE 101 performs operation 316 without waiting in the connected state or registered state). At operation 318, the UE 101 adds the current PLMN to a list (e.g., a list stored in a memory of the UE 101), specifically, the list referred to as "PLMN not allowed to operate at the present location of the UE". According to embodiments, the list may indicate associations between two or more among inaccessibility of the specific PLMN (e.g., PLMN1), the current location of the UE 101 (e.g., as determined using a Global Positioning System (GPS) receiver, triangulation of signals obtained from a plurality of base stations/access points, location information received from an external source, etc.), the requested service(s) indicated in the PDU establishment request that was rejected by the PDU establishment failure message, and/or the NG-RAN satellite RAT.

At operation 320, the UE 101 initiates PLMN selection to find the same PLMN1 (or a similar PLMN1) in NG-RAN instead of moving to an E-UTRAN which has lower capability. For example, the E-UTRAN may have lower data rate, coverage, and high latency compared to the NG-RAN. At operation 322, the UE 101 initiates a timer, specifically, timer T3540. The timer may run for a predefined (or alternatively, given) time period, such as 10 seconds. At operation 324, the UE 101 disables N1 mode only for the NG-RAN satellite for PLMN1 (e.g., without disabling N1 mode for NG-RAN). At operation 326, the timer T3540 expires.

At operation 328, the UE 101 releases the N1 NAS signaling connection locally and enters an idle state. According to embodiments, the UE 101 releases the established RRC connection with the NG-RAN satellite 105 (e.g., by performing operation 328). For instance, on expiry of the timer T3540, if the UE 101 still remains in connected state, the UE 101 may release N1 NAS signaling connection locally and enters to an idle state. Upon entering idle state if the 5GMM state of the UE 101 is 5GMM.DEREGEGISTERED-PLMN. SEARCH state, the UE 101 may PLMN selection procedure, as shown by operation 330. Further, reference is made to section 5.3.1.3 Release of N1 NAS signaling connection of 24.501 specification. Specifically, releasing the RRC connection with the NG-RAN satellite 105 may refer to release of the N1 NAS signaling connection through release of radio connection and resources between the UE 101 and the network 111.

At operation 330, the UE performs PLMN selection and finds the same PLMN1 (or a similar PLMN1) in NG-RAN. In a non-limiting embodiment, the PLMN selection may be performed as per 3GPP TS 23.122. For instance, the UE 101 identifies the NG-RAN cell by decoding SIB1 of the 5G cell and finds the RAT type to NG-RAN and the cellBarred-NTN-r17 is set to barred in cellAccessRelatedInfo-NTN-r17, Refer 38.331 SIB1 information. Once the UE 101 camps on the NG-RAN cell, the UE 101 establishes a RRC connection to connect to the network following section 5.3.3 RRC connection establishment of spec 38.331.

Next, at operations 332-338, the UE 101 may perform the RRC connection establishment procedure with the network 111, as previously performed in the operations 302-308, respectively, except that operation 332 includes sending the "REGISTRATION REQUEST" message to the NG-RAN 103 rather than the NG-RAN satellite 105.

At operation 340, the UE 101 may transmit the PDU establishment request for the same service (or a similar service) e.g., IMS service. Further, the network 111 may transmit the PDU establishment accept message indicating acceptance of the PDU establishment request and grant of the requested IMS services, as shown in operation 342. The IMS registration process may be successfully completed at the UE 101 and the UE 101 uses the requested IMS services via the NG-RAN 103, as indicated at operation 344. According to embodiments, for example, the UE 101 performs a voice call (e.g., with another user equipment) via the NG-RAN 103.

In embodiments, the UE 101 is a voice-centric device, and the IMS voice is used for the operation of the UE 101. The UE 101 may disable the N1 mode capability of the NG-RAN satellite 105 and attempt to perform a PLMN search (PLMN selection) of the same PLMN, or a similar PLMN, (e.g.., the PLMN-1) in the NG-RAN 103 before (or instead of) selecting the E-UTRAN 107. The UE 101 finds/identifies the NG-RAN 103 that is associated with the same PLMN, or a similar PLMN, (e.g., PLMN-1) and performs the RRC connection establishment procedure.

Thus, instead of degrading the performance of the network 111 and/or the UE 101, by switching to a lower-capability access cell, the method 300 enables the UE 101 to access the services via the higher-capability access cell of the same PLMN (or a similar PLMN). Specifically, the method 300 benefits the UE 101 with the information that the UE 101 is rejected for a requested service in the NG-RAN satellite 105 alone, however, the UE 101 may still access the service via the NG-RAN 103.

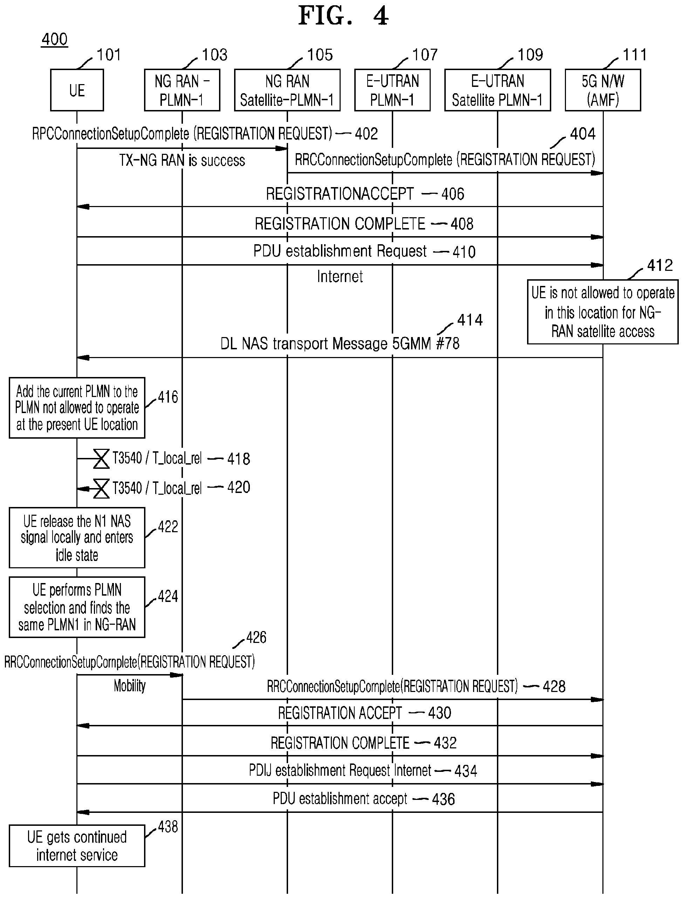

**Figure 4** illustrates a sequence of operations depicting a method 400 for a PDU session establishment procedure for a service, according to embodiments of the present disclosure. In embodiments, the method 400 provides a solution to one or more challenges illustrated in FIG. 2.

Operations 402-414 relate to the establishment of an RRC connection of the UE 101 with the NG-RAN satellite 105, and the failure of the PDU establishment procedure, as explained in reference to operations 202-214 (shown in FIG. 2), respectively. Accordingly, a detailed description of the operations 402-414 has been omitted for the sake of brevity. In operation 410, the PDU establishment request may be for internet service.

At operation 416, the UE 101 adds the current PLMN to a list, specifically, the list referred to as "PLMN not allowed to operate at the present location of the UE". In one non-limiting example, the "PLMN not allowed to operate at the present location of the UE" list may correspond the spec defined list, refer section 2.23.2 of spec 24.501. Local deregistration may not be performed (e.g., in contrast to the discussion of FIG. 3). At operation 418, the timer T3540 is initiated. The UE may remain in the registered state. At operation 420, the timer T3540 expires. According to embodiments, the list may indicate associations between two or more among inaccessibility of the specific PLMN (e.g., PLMN1), the current location of the UE 101 (e.g., as determined using a Global Positioning System (GPS) receiver, triangulation of signals obtained from a plurality of base stations/access points, location information received from an external source, etc.), the requested service(s) indicated in the PDU establishment request that was rejected by the PDU establishment failure message, and/or the NG-RAN satellite RAT.

On an expiry of the timer T3540, the UE 101 releases the N1 NAS signaling connection locally and enters into an idle state at operation 422. Further, at operation 424, the UE 101 performs PLMN selection and finds the same PLMN1 (or a similar PLMN1) in NG RAN. In embodiments, the PLMN selection may be performed as per 3GPP TS 23.122. The mobility registration may then be performed instead of initial registration. According to embodiments, prior to operation 420 the UE 101 may receive a release indication from the network 111 indicating that release of the RRC connection with the NG RAN satellite 105. In such a case, the UE 101 may perform operation 424 without performing operations 420 and 422.

At operations 426-428, the UE 101 may initiate an RRC connection (via a mobility registration procedure) with the network 111. The UE 101 initiates an "RRCConnectionSetupComplete" process by sending a "REGISTRATION REQUEST" message to the NG-RAN PLMN1 103 (e.g., rather than the NG-RAN satellite PLMN1 105), in operation 426, and the NG-RAN PLMN1 103 may implement the "RRCConnectionSetupComplete" process by transmitting the received "REGISTRATION REQUEST" message to the network 111 (in operation 428). The network 111 may process the received "REGISTRATION REQUEST" message by performing authentication and validation of the received message. Upon successful completion of authentication and validation of the received message, the network 111 may transmit a "REGISTRATION ACCEPT" message to the UE 101 at operation 430 indicating acceptance of a registration request of the UE 101. The network 111 may share an allocation of resources in the "REGISTRATION ACCEPT" message. Operation 432 may represent completion of the registration process.

At operation 434, the_UE 101 may transmit the PDU establishment request for the same service, or a similar service, e.g., internet service. Further, the network 111 may transmit the PDU establishment accept message indicating acceptance of the PDU establishment request and grant of the requested internet services, as shown at operation 436. The UE 101 may thus continue to get the internet services, as indicated in operation 438._According to embodiments, the UE 101 may generate, transmit and/or receive one or more signals in connection with the internet services in operation 438.

Thus, the method 400 prevents or reduces the performance of de-registration, and allows the UE 101 to release the N1 NAS signaling connection locally at the UE 101 and perform registration with the NG-RAN 103.

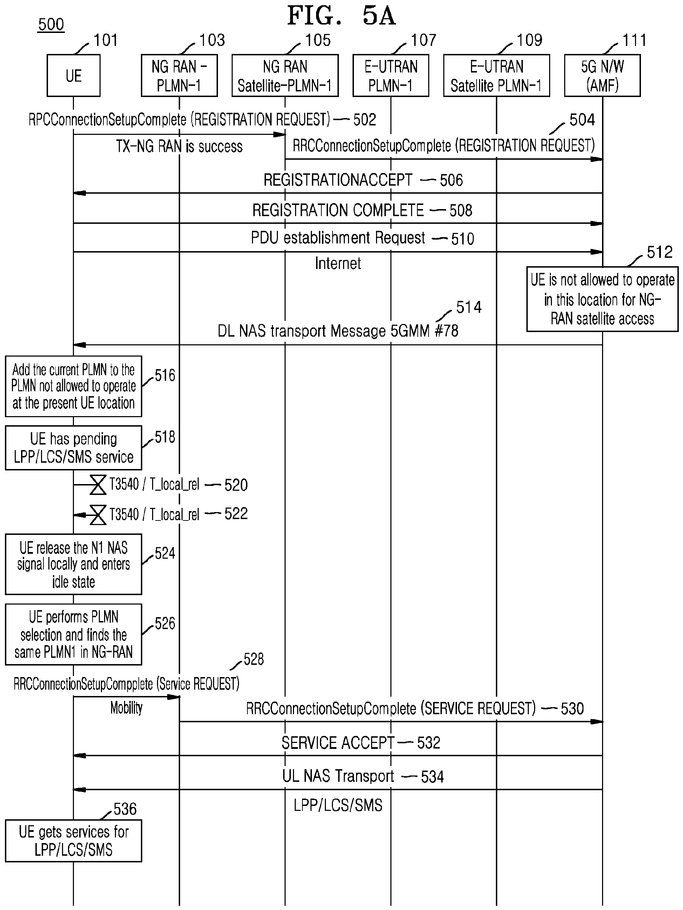

**Figure 5A** illustrates a sequence of operations depicting a method 500 for a PDU session establishment procedure for a service, according to embodiments of the present disclosure. In embodiments, the method 500 provides a solution to one or more challenges illustrated in FIG. 2.

Operations 502-514 relate to the establishment of an RRC connection of the UE 101 with the NG-RAN satellite 105, and the failure of the PDU establishment procedure, as explained in reference to operations 202-214 (shown in FIG. 2), respectively. Accordingly, a detailed description of the operations 502-514 has been omitted for the sake of brevity. In the illustrated example, at operation 510, the PDU establishment request may relate to internet services.

At operation 516, the UE 101 adds the current PLMN to a list, specifically, the list referred to as "PLMN not allowed to operate at the present UE location". Following operation 516, the UE 101 has pending services. The pending services may not be internet-based services. Non-limiting examples of the pending services include LPP (LTE Positioning Protocol)-based services, Short Message Service (SMS), and Location Services (LCS). Further examples of pending services may include, but not limited to, Ultra-Reliable and Low-Latency Communication (URLLC) services, Vehicle-to-Everything (V2X) (e.g., vehicle-to-cellular service) services, High Performance Machine Type Communication (HMTC) services, redcap RAT services, and so forth. The UE 101 may identify or determine services/uplink messages that are pending, as UE 101 is blocked from transmitting said pending messages in NG-RAN until a de-registration is performed. According to embodiments, the list may indicate associations between two or more among inaccessibility of the specific PLMN (e.g., PLMN1), the current location of the UE 101 (e.g., as determined using a Global Positioning System (GPS) receiver, triangulation of signals obtained from a plurality of base stations/access points, location information received from an external source, etc.), the requested service(s) indicated in the PDU establishment request that was rejected by the PDU establishment failure message, and/or the NG-RAN satellite RAT.

At operation 520, the UE 101 initiates a timer, specifically, timer T3540. The timer may run for a predefined (or alternatively, given) time period, such as 10 seconds. At operation 522, the timer T3540 expires. At operation 524, the UE 101 may release the N1 NAS signal locally. Further, the UE 101 may enter the idle state. The UE 101 in the idle state may move to the NG-RAN 103 e.g., the NG-RAN access cell of the same PLMN, or a similar PLMN, (PLMN-1).

At operation 526, the UE 101 performs PLMN selection and finds the same PLMN, or a similar PLMN, (e.g., PLMN1) in the NG-RAN. In embodiments, the PLMN selection may be performed as per 3GPP TS 23.122. At operations 528-530, the UE 101 may initiate an RRC connection procedure with the network 111. The UE 101 initiates an "RRCConnectionSetupComplete" process by sending a "SERVICE REQUEST" message to the NG-RAN PLMN1 103 (in operation 528), and the NG-RAN PLMN1 103 may implement the "RRCConnectionSetupComplete" process by transmitting the received "SERVICE REQUEST" message to the network 111 (in operation 530). The service request may relate to the pending services (for example, LCS, LPP, SMS, etc.).

At operation 532, the network 111 may transmit the "SERVICE ACCEPT" message indicating acceptance of the service request. At operation 534, the network 111 may transmit the "UL NAS Transport" message to the UE 101. The UE 101 may thus access the requested services and complete pending service requests, as indicated at operation 536. According to embodiments, the UE 101 may generate, transmit and/or receive one or more signals in connection with services including LPP (LTE Positioning Protocol)-based services, Short Message Service (SMS), and/or Location Services (LCS) in operation 536.

In embodiments, the UE 101 may identify/determine that a current Tracking Area Identity (TAI) associated with the UE 101 is still part of a current registration area e.g., NG-RAN 103. Upon determining that the current TAI is part of the current registration area, at operation 522, the UE 101 may initiate Scheduling Request (SR) procedures for the pending tasks/services to move to a connected state and perform pending uplink signaling.

Thus, the methods enable the UE 101 to establish a RRC connection with the NG-RAN 103 if the UE 101 has moved to NG-RAN 103 during the registered state with the NG-RAN satellite 105. Further, the method 500 enables the UE 101 to complete pending uplink signaling/services specified under subclause 5.4.5.2.1 of TS 24.501, if the UE 101 is allowed to perform said uplink signaling/services and the current TAI is part of the registered TAI list. Furthermore, the method also enables the UE 101 to proceed with PDU establishment or any pending uplink signaling related to LPP, LCS, SMS, or any service specified under subclause 5.4.5.2.1 on the same PLMN (or a similar PLMN) in NG_RAN cell, if the current TAI is not the part of the registered TAI list.

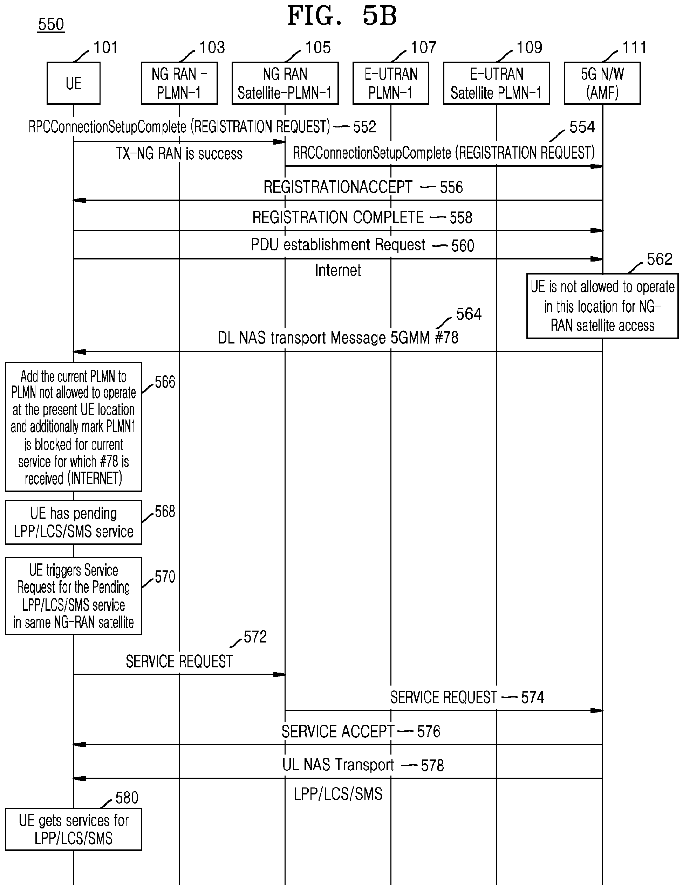

**Figure 5B** illustrates a sequence of operations depicting a method 550 for a PDU session establishment procedure for a service, according to embodiments of the present disclosure. In embodiments, the method 550 provides a solution to one or more challenges illustrated in FIG. 2.

Operations 552-564 relate to the establishment of an RRC connection of the UE 101 with the NG-RAN satellite 105, and the failure of the PDU establishment procedure, as explained in reference to operations 502-514 of FIG. 5A, respectfully. Accordingly, a detailed description of the operations 502-514 has been omitted for the sake of brevity. In the illustrated example, at operation 560, the PDU establishment request may relate to internet services.

At operation 566, the UE 101 adds the current PLMN to a list, specifically, the list referred to as "PLMN not allowed to operate at the present UE location". In addition, the UE 101 marks the PLMN1 as blocked for the current service (here, internet services) for which failure (#78) has been received in operation 564. The UE 101 may have a new list different from the "PLMN not allowed to operate at the present UE location". The PLMN1 may be mapped to the service that has failed based on the message #78 and added to the new list. According to embodiments, the list may indicate associations between two or more among inaccessibility of the specific PLMN (e.g., PLMN1), the current location of the UE 101 (e.g., as determined using a Global Positioning System (GPS) receiver, triangulation of signals obtained from a plurality of base stations/access points, location information received from an external source, etc.), the requested service(s) indicated in the PDU establishment request that was rejected by the PDU establishment failure message, and/or the NG-RAN satellite RAT. For instance, when the UE 101 requests PDU for internet service in the NG satellite cell and gets rejected by the network 111, the UE 101 may add the following information to the list as follows:

"PLMN ID + RAT (EXAMPLE NG-RAN SATELLITE RAT) + SERVICE (INTERENT) + GEOGRAPHIC LOCATION + UE IMPLEMENTATION SPECIFIC DISTANCE".

Thereafter, when the UE 101 wants to trigger PDU for a URLLC service in same the NG-RAN satellite cell, the UE 101 may check the list since it is allowed, the UE 101 triggers PDU and if same gets rejected. The UE 101 may add a new entry for the requested URLLC service

Following operation 566, the UE 101 has pending services. Non-limiting examples of the pending services include LPP (LTE Positioning Protocol)-based services, Short Message Service (SMS), and Location Services (LCS).

At operation 570, the UE 101 triggers service request for the pending services (for example, LPP, SMS, LCS, etc.) in the same NG-RAN satellite (or a similar NG-RAN satellite). At operation 572, the UE 101 sends a "SERVICE REQUEST" message to the NG-RAN satellite 105, and at operation 574 the NG-RAN satellite 105 may transmit the received "SERVICE REQUEST" message to the network 111. The service request may relate to the pending services, (for example, LCS, LPP, SMS, etc.). At operation 576, the network 111 may transmit the "SERVICE ACCEPT" message indicating acceptance of the service request. At operation 578, the network 111 may transmit a "UL NAS Transport" message to the UE 101. The UE 101 may thus access the requested services and complete pending service requests, as indicated at operation 580. According to embodiments, the UE 101 may generate, transmit and/or receive one or more signals in connection with services including LPP (LTE Positioning Protocol)-based services, Short Message Service (SMS), and/or Location Services (LCS) in operation 580.

In the illustrated example of FIG. 5B, the UE may not perform PLMN selection, simply UE will perform local release of signaling connection and send service request for pending services directly.

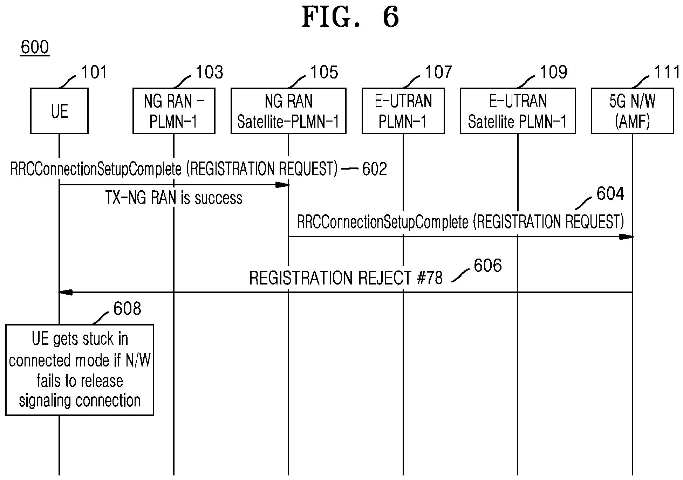

**Figure 6** illustrates a sequence of operations depicting a challenge for signaling release at a User Equipment (UE), according to the conventional state of art.

At operation 602, the UE 101 initializes a Radio Resource Control (RRC) connection with the network 111 via the NG-RAN satellite 105. In particular, the UE 101 may initiate an "RRCConnectionSetupComplete" process by sending a "REGISTRATION REQUEST" message corresponding to a registration request to the NG-RAN satellite 105. At operation 604, the NG-RAN satellite 105 may implement the "RRCConnectionSetupComplete" process by transmitting the received "REGISTRATION REQUEST" message to the network 111. At operation 606, the network 111 rejects the registration request and transmits a "REGISTRATION REJECT" message with cause #78. At operation 608, the UE 101 may get stuck in the connected mode if the network 111 fails to release the connection. In particular, there does not exist any solution to abnormal rejection requests under #78, and the UE 101 may fail to perform PLMN selection or avail services in other Radio Access Technologies (RATs).

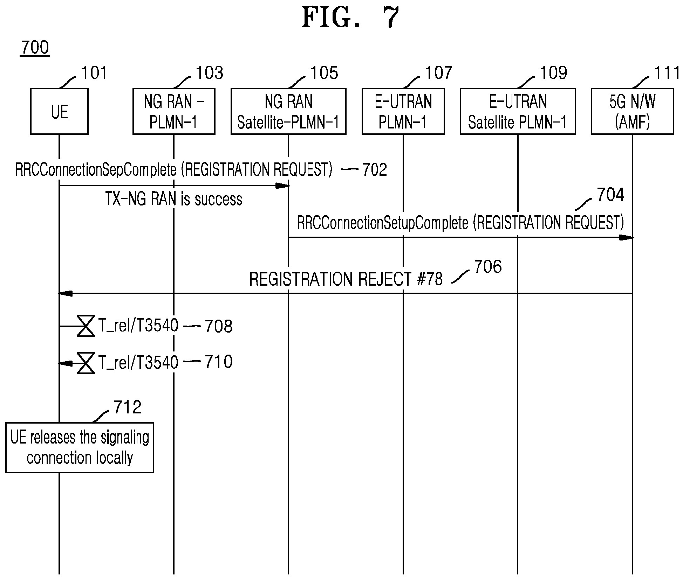

**Figure 7** illustrates a sequence of operations depicting a method 700 for the local release of signaling connection, according to embodiments of the present disclosure. In embodiments, the PLMN selection may be performed as per 3GPP TS 23.122. The method 700 may correspond to a solution to the challenge illustrated in FIG. 6. Further, operations 702-706 are similar to operations 602-608, respectively, as explained in reference to FIG. 6, accordingly a description of the operations 702-706 has been omitted for the sake of brevity.

At operation 708, upon receiving the "REGISTRATION REJECT" message from the network 111, the UE 101 may initiate a predefined (or alternatively, given) timer. In embodiments, the predefined (or alternatively, given) timer may correspond to T3540. At operation 710, the UE 101 may determine that the initiated predefined (or alternatively, given) timer has lapsed. In response to determining the predefined (or alternatively, given) timer has lapsed, the UE 101 releases the signaling connection (e.g., the RRC connection) locally, at operation 712.

Thus, the method 700 provides the UE 101 a mechanism to handle signaling connection when the UE 101 gets rejected in NG-RAN satellite access with 5GMM cause #78. Specifically, the method 700 may enable the UE 101 to perform PLMN selection and obtain services faster instead of getting stuck in connected mode for a longer duration. In embodiments, prior to performing the PLMN selection, the method 700 may also include initializing a predefined (or alternatively, given) timer and waiting for the network to release the established RRC connection with the NG-RAN satellite cell. According to embodiments, the UE 101 may perform PLMN selection in response to receiving a release indication from the network indicating the release of the established RRC connection. According to embodiments, the UE 101 may perform local deregistration with the NG-RAN satellite cell before performing the PMLN selection. The method 700 may also include upon determining a lapse of the predefined (or alternatively, given) timer and no release of RRC connection from the network, performing local release with the NG-RAN satellite cell to perform the PLMN selection. Further, the method 700 may include selecting the other PLMN from one or more PLMNs identified by the UE 101 (e.g., as a result of the PLMN selection). According to embodiments, the UE 101 may generate, transmit and/or receive one or more signals in connection with the services after performing the PLMN selection.

Further, if no other PLMN from another RAT is available or the UE 101 is reselecting back NG-RAN satellite, the UE 101 may avoid (or reduce) camping/de-prioritize same PLMN (or a similar PLMN) in the NG-RAN satellite on which previously the UE received PDU establishment procedure failed due to not being allowed in the location.

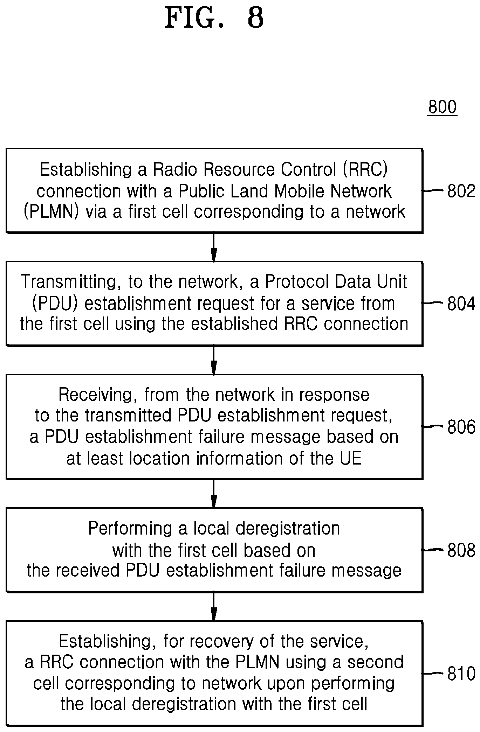

**Figure 8** illustrates an example process flow depicting a method 800 for service recovery at the UE 101, according to embodiments of the present disclosure.

At operation 802, the method 800 includes establishing an RRC connection with a PLMN via a first cell corresponding to a network. The first cell may correspond to a Next Generation-Radio Access Network (NG-RAN) satellite cell.

At operation 804, the method 800 includes transmitting, to the network, a PDU establishment request for a service from the first cell using the established RRC connection. For instance, the UE 101 may transmit the PDU establishment request for internet/web services from the network.

Next at operation 806, the method 800 includes receiving, from the network in response to the transmitted PDU establishment request, a PDU establishment failure message based on at least location information of the UE 101. For instance, if the network determines that the UE 101 is not allowed to access the requested service using the first cell due to the location of the UE 101, the network may transmit the PDU establishment failure message, for example DL NAS message with cause #78.

At operation 808, the method 800 includes performing a local deregistration with the first cell based on the received PDU establishment failure message. In particular, the UE 101 may not wait for a de-registration procedure with the network and perform local de-registration with the first cell. According to embodiments, the UE 101 may perform operation 808 immediately, or promptly, in response to receiving the PDU establishment failure message.

At operation 810, the method 800 includes establishing an RRC connection with the PLMN using a second cell corresponding to the network upon (e.g., after, in response to, etc.) performing the local deregistration with the first cell for recovery of the service. In embodiments, the second cell may correspond to a Radio Access Technology (RAT)-based cell different from the first cell (e.g., the NG RAN 103). According to embodiments, the UE 101 may obtain the service (e.g., the internet and/or web services) via the network in response to successful completion of operation 810).

In embodiments, the method 800 also includes adding the PLMN to a restricted list of PLMNs wherein the restricted list of PLMNs corresponds to a "PLMN not allowed to operate at the present UE location" list maintained in the UE 101.

After performing the local deregistration with the first cell, the method 800 may also include initializing a predefined (or alternatively, given) timer and waiting for the network to release the established RRC connection with the first cell. Further, upon determining a lapse of the predefined (or alternatively, given) timer and no release of the established RRC connection from the network, the method 800 may include performing the local release of the established RRC connection with the first cell. Thereafter, the method 800 may include performing the PLMN selection in response to the received release. In embodiments, the PLMN selection may be performed as per 3GPP TS 23.122. In embodiments, the predefined (or alternatively, given) timer may be a T3540 timer. In one embodiment, the method 800 may also include performing mobility registration using available registration context with first PLMN via a second cell of another network or a second PLMN via the first cell corresponding to the network.

Embodiments are examples and the operations of the method 800 as shown in Fig. 8 may occur in variations to the sequence in accordance with various examples. The variation may include the addition and/or omission of operations illustrated in Fig. 8.

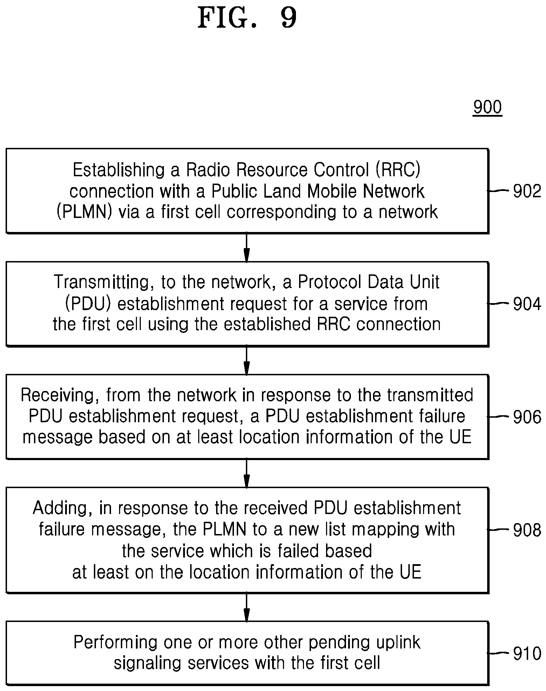

**Figure** 9 illustrates an example process flow depicting a method 900 for service recovery at the UE 101, according to embodiments of the present disclosure.

At operation 902, the method 900 includes establishing an RRC connection with a PLMN via a first cell corresponding to a network. The first cell may correspond to an NG-RAN satellite cell.

At operation 904, the method 900 includes transmitting, to the network, a PDU establishment request for a service from the first cell using the established RRC connection. Next, at operation 906, the method 900 includes receiving, from the network in response to the transmitted PDU establishment request, a PDU establishment failure message based on at least location information of the UE 101.

At operation 908, the method 900 includes adding, in response to the received PDU establishment failure message, the PLMN to a new list mapping with the service which is failed based at least on the location information of the UE 101. According to embodiments, the list may be stored in a memory of the UE 101. According to embodiments, the list may indicate associations between two or more among inaccessibility of the specific PLMN (e.g., PLMN1), the current location of the UE 101 (e.g., as determined using a Global Positioning System (GPS) receiver, triangulation of signals obtained from a plurality of base stations/access points, location information received from an external source, etc.), the requested service(s) indicated in the PDU establishment request that was rejected by the PDU establishment failure message, and/or the NG-RAN satellite RAT.

At operation 910, the method 900 includes performing one or more other pending uplink signaling services with the first cell. Thus, in case one of the services is restricted for implementation using the first cell at the current location, the UE 101 may perform other services which may be performed using the established RRC connection with the first cell. Thus, the method 900 may save time and resources used for the de-registration and registration process.

Embodiments are examples and the operations of the method 900 as shown in Fig. 9 may occur in variations to the sequence in accordance with various examples. The variation may include addition and/or omission of operations illustrated in Fig. 9.

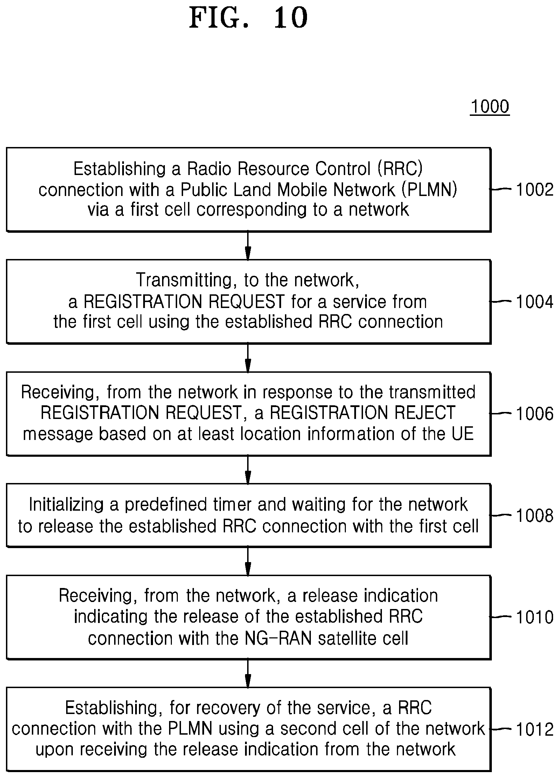

**Figure 10** illustrates an example process flow depicting a method 1000 for service recovery at the UE 101, according to embodiments of the present disclosure.

At operation 1002, the method 1000 includes establishing an RRC connection with a PLMN via a first cell corresponding to a network. The first cell may correspond to an NG-RAN satellite cell.

At operation 1004, the method 1000 includes transmitting, to the network, a REGISTRATION REQUEST for a service from the first cell using the established RRC connection. Next, at operation 1006, the method 1000 includes receiving, from the network in response to the transmitted REGISTRATION REQUEST, a REGISTRATION REJECT message based on at least location information of the UE 101.

At operation 1008, the method 1000 includes initializing a predefined (or alternatively, given) timer and waiting for the network to release the established RRC connection with the first cell. In embodiments, the predefined (or alternatively, given) timer may be a T3540 timer. Next, at operation 1010, the method 1000 includes performing local release of the first RRC connection in response to determining the first RRC connection has not been released by the network by expiry of the timer.

At operation 1012, the method 1000 includes establishing, for recovery of the service, an RRC connection with the PLMN using a second cell of the network upon receiving the release indication from the network. In embodiments, the second cell may correspond to a RAT-based cell different from the first cell (e.g., the NG-RAN cell).

Embodiments are examples and the operations of the method 1000 as shown in FIG. 10 may occur in variations to the sequence in accordance with various examples. The variation may include addition and/or omission of operations illustrated in FIG. 10.

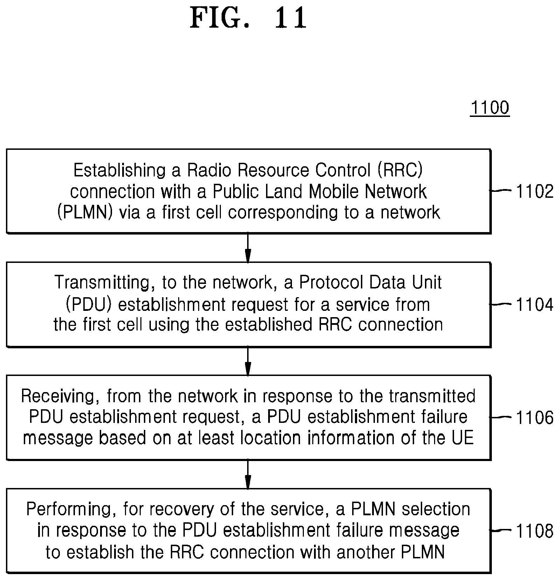

**Figure 11** illustrates an example process flow depicting a method 1100 for service recovery at the UE 101, according to embodiments of the present disclosure.

At operation 1102, the method 1100 includes establishing an RRC connection with a PLMN via a first cell corresponding to a network. The first cell may correspond to an NG-RAN satellite cell.

At operation 1104, the method 1100 includes transmitting, to the network, a PDU establishment request for a service from (e.g., via) the first cell using the established RRC connection. Next, at operation 1106, the method 1100 includes receiving, from the network in response to the transmitted PDU establishment request, a PDU establishment failure message based on at least location information of the UE 101.

At operation 1108, the method 1100 includes performing, for recovery of the service, a PLMN selection in response to the PDU establishment failure message to establish the RRC connection with another PLMN. In embodiments, the PLMN selection may be performed as per 3GPP TS 23.122.

In embodiments, prior to performing the PLMN selection, the method 1100 may also include initializing a predefined (or alternatively, given) timer and waiting for the network to release the established RRC connection with the NG-RAN satellite cell. According to embodiments, operation 1108 may be performed in response to receiving a release indication from the network indicating the release of the established RRC connection. According to embodiments, the UE 101 may perform local deregistration with the NG-RAN satellite cell before performing the PMLN selection. The method 1100 may also include upon determining a lapse of the predefined (or alternatively, given) timer and no release of RRC connection from the network, performing local release with the NG-RAN satellite cell to perform the PLMN selection. Further, the method 1100 may include selecting the other PLMN from one or more PLMNs identified by the UE 101 (e.g., as a result of the PLMN selection).

Embodiments are examples and the operations of the method 1100 as shown in FIG. 11 may occur in variations to the sequence in accordance with various examples. The variation may include addition and/or omission of operations illustrated in FIG. 11.

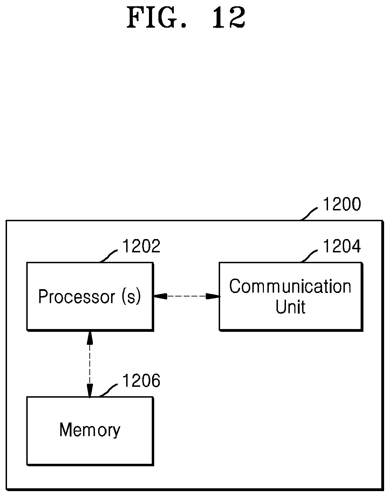

**Figure 12** illustrates an example diagram of a network 1200 (e.g., a network entity), according to embodiments of the present disclosure. The network 1200 may correspond to 5GMM, as discussed throughout this disclosure. The network 1200 may include at least one processor 1202 (generally referred to herein as the processor 1202), a memory unit 1206 (e.g., memory, storage, etc.), and/or a communication unit 1204 (e.g., communicator or communication interface). Further, the network 1200 may also include the Cloud -RAN (C-RAN), a Central Unit (CU), a core Network (NW), a Distributed unit (DU) or the any other possible network (NW) entity. The communication unit 1204 may perform one or more functions for transmitting and receiving signals via a wireless channel.

As an example, the processor 1202 may be a single processing unit or a number of units, all of which could include multiple computing units. The processor 1202 may be implemented as one or more microprocessors, microcomputers, microcontrollers, digital signal processors, central processing units, state machines, logic circuitries, and/or any devices that manipulate signals based on operational instructions. Among other capabilities, the processor 1202 is configured to fetch and execute computer-readable instructions and data stored in the memory. The processor 1202 may include one or a plurality of processors. At this time, one or a plurality of processors 1202 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 1202 may control the processing of the input data in accordance with a predefined (or alternatively, given) operating rule or artificial intelligence (AI) model stored in the non-volatile memory and the volatile memory, e.g., memory unit 1206. The predefined (or alternatively, given) operating rule or artificial intelligence model is provided through training or learning.

The memory 1206 may include any non-transitory computer-readable medium known in the art including, for example, volatile memory, such as Static Random Access Memory (SRAM) and Dynamic Random Access Memory (DRAM), and/or non-volatile memory, such as Read-Only Memory (ROM), erasable programmable ROM, flash memories, hard disks, optical disks, and/or magnetic tapes.

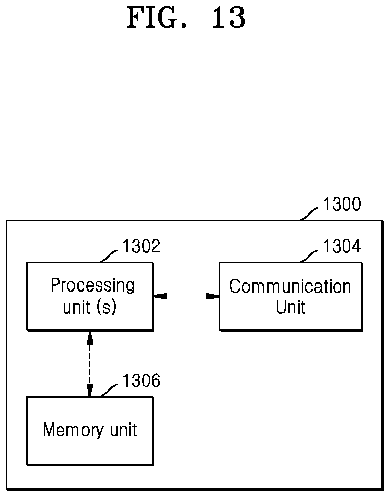

**Figure 13** is a diagram illustrating the configuration of a UE 1300 in a wireless communication system, according to embodiments of the present disclosure. The configuration of Figure 13 may be understood as a part of the configuration of the UE 1300. Further, the method as disclosed above may be implemented in the UE 1300 according to embodiments. In embodiments, the UE 1300 corresponds to the UE 101. Herein, it is understood that terms including "unit" or "module" at the end may refer to the unit for processing at least one function or operation and may be implemented in hardware, software, or a combination of hardware and software.

Referring to Figure 13, the UE 1300 may include at least one processor 1302 (generally referred to herein as the processor 1302), a communication unit 1304 (e.g., communicator or communication interface), and/or a memory unit 1306 (e.g., a memory). By way of example, the UE 1300 may be a User Equipment, such as a cellular phone or other device that communicates over a plurality of cellular networks (such as a 3G, 4G, a 5G or pre-5G, 6G network or any future wireless communication network). The communication unit 1304 may perform functions for transmitting and receiving signals via a wireless channel.

As an example, the processor 1302 may be a single processing unit or a number of units, all of which could include multiple computing units. The processor 1302 may be implemented as one or more microprocessors, microcomputers, microcontrollers, digital signal processors, central processing units, state machines, logic circuitries, and/or any devices that manipulate signals based on operational instructions. Among other capabilities, the processor 1302 is configured to fetch and execute computer-readable instructions and data stored in the memory. The processor 1302 may include one or a plurality of processors. At this time, one or a plurality of processors 1302 may be a general-purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors 1302 may control the processing of the input data in accordance with a predefined (or alternatively, given) operating rule or artificial intelligence (AI) model stored in the non-volatile memory and the volatile memory, e.g., memory unit 1306. The predefined (or alternatively, given) operating rule or artificial intelligence model is provided through training or learning.

The memory unit 1306 may include any non-transitory computer-readable medium known in the art including, for example, volatile memory, such as Static Random Access Memory (SRAM) and Dynamic Random Access Memory (DRAM), and/or non-volatile memory, such as Read-Only Memory (ROM), erasable programmable ROM, flash memories, hard disks, optical disks, and magnetic tapes.

The present disclosure enables the UE to establish PDU establishment with the same PLMN (or a similar PLMN) in NG-RAN immediately (or promptly) without waiting for the de-registration procedure. Also, the present disclosure prevents (or reduces) the additional overhead NAS signalling procedures by the UE. Thus, the present disclosure provides effective and efficient PDU establishment procedures.

Conventional devices and methods for performing wireless communication respond to rejection of a PDU service request via an RRC connection through an NG-RAN satellite cell by establishing a new RRC connection through a UTRAN cell. However, UTRAN cells provide lower capability network access as compared to NG-RAN cells, and NR services may not be availed through UTRAN cells. Accordingly, the conventional devices and methods result in reduced performance of the conventional devices.

However, according to embodiments, improved devices and methods are provided for responding to such a rejection of a PDU service request via an RRC connection through an NG-RAN satellite cell. For example, the improved devices and methods may perform local de-registration with the NG-RAN satellite cell in response to the rejection and register through an NG-RAN cell (e.g., a non-satellite NG-RAN cell). Accordingly, the improved devices and methods overcome the deficiencies of the conventional devices and methods to provide higher capability network access via the NG-RAN cell and enable access to NR services, thereby improving performance of the improved devices.

Also, the conventional devices and methods respond to the rejection of the PDU service request by performing de-registration with a network. However, this de-registration involves signaling that consumes excessive resources (e.g., delay, power, bandwidth, processor, memory, etc.). Also, until the de-registration is completed, pending services for the conventional devices are blocked resulting in further power consumption.

However, according to embodiments, the improved devices and methods may immediately (or promptly) release an N1 NAS signalling connection locally in response to the rejection of the PDU service request without performing the de-registration signalling (e.g., without transmitting a de-registration request message to the network). Following the N1 NAS signalling connection release, the improved devices and methods may register through the NG-RAN cell (e.g., the non-satellite NG-RAN cell) to enable access to the service(s). Accordingly, the improved devices and methods overcome the deficiencies of the conventional devices and methods to at least reduce resource consumption (e.g., delay, power, bandwidth, processor, memory, etc.).

According to embodiments, operations described herein as being performed by the UE 101, the network 111, the NG-RAN 103, the NG-RAN satellite 105, the E-UTRAN 107, the E-UTRAN satellite 109, the network 1200, the at least one processor 1202, the communication unit 1204, the UE 1300, the at least one processor 1302 and/or the communication unit 1304 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 1206 and/or the memory 1306). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments disclosed herein may be implemented using processing circuitry. For example, embodiments disclosed herein may be implemented using at least one software program running on at least one hardware device and performing network management functions to control the elements.

While specific language has been used to describe the disclosure, any limitations arising on account of the same are not intended. As would be apparent to a person in the art, various working modifications may be made to the method in order to implement the inventive concepts as taught herein.

The drawings and the forgoing description give examples of embodiments. Those skilled in the art will appreciate that one or more of the described elements may well be combined into a single functional element. Alternatively, certain elements may be split into multiple functional elements. Elements from one example may be added to another example. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to challenges have been described above with regard to specific examples. However, the benefits, advantages, solutions to challenges, and any component(s) that may cause any benefit, advantage, or solution to occur or become more pronounced are not to be construed as a critical, required, or essential feature or component of any or all the claims.

## Claims

1. A method implemented in a User Equipment, UE, for service recovery in a wireless communication network, the method comprising:
establishing a first Radio Resource Control, RRC, connection with a first Public Land Mobile Network, PLMN, via a first cell corresponding to a network;
transmitting, to the network, one of, a Protocol Data Unit, PDU, establishment request, or a registration request for a service from the first cell using the first RRC connection;
receiving, from the network in response to the one of a PDU establishment request or a registration request, one of a PDU establishment failure message or a registration reject message based on at least location information of the UE;
performing a local release of the first RRC connection with the first cell based on one of the PDU establishment failure message or the registration reject message; and
establishing a second RRC connection with one of the first PLMN via a second cell of one of another network or a second PLMN via the first cell corresponding to the network.

2. The method as claimed in claim 1, further comprising:
adding the PLMN to a restricted list of PLMNs, the restricted list of PLMNs corresponding to a, "PLMN not allowed to operate at the present UE location", list maintained by the UE based on the PDU establishment failure message.

3. The method as claimed in claim 1 or 2, wherein the first cell corresponds to a Next Generation-Radio Access Network, NG-RAN satellite cell and the second cell corresponds to a Radio Access Technology, RAT-based cell different from the first cell.

4. The method as claimed in claim 1, 2, or 3, further comprising:
performing a local deregistration with the first cell based on the PDU establishment failure message.

5. The method as claimed in any one of claims 1 to 4, further comprising:
performing mobility registration using available registration context with first PLMN via a second cell of another network or a second PLMN via the first cell corresponding to the network.

6. The method as claimed in any one of claims 1 to 5, further comprising:
selecting the second PLMN from among one or more PLMNs identified as a result of a PLMN selection procedure.

7. The method as claimed in any one of claims 1 to 6, further comprising:
initializing a timer after the performing the local deregistration with the first cell;
performing local release of the first RRC connection in response to determining the first RRC connection has not been released by the network by expiry of the timer; and
performing PLMN selection after the performing the local release of the first RRC connection.

8. The method as claimed in claim 7, wherein the timer is a T3540 timer.

9. A system for service recovery at a User Equipment, UE, in a wireless communication network, comprising:
a processing circuitry configured to:
establish a first Radio Resource Control, RRC, connection with a first Public Land Mobile Network, PLMN, via a first cell corresponding to a network;
transmit, to the network, one of, a Protocol Data Unit, PDU, establishment request, or a registration request for a service from the first cell using the first RRC connection;
receive, from the network in response to the one of, a PDU establishment request, or a registration request, one of a PDU establishment failure message or a registration reject message based on at least location information of the UE;
perform a local release of the first RRC connection with the first cell based on one of the PDU establishment failure message or the registration reject message; and
establish a second RRC connection with one of the first PLMN via a second cell of one of another network or a second PLMN via the first cell corresponding to the network.

10. The system as claimed in claim 9, wherein the processing circuity is further configured to:
add the PLMN to a restricted list of PLMNs, the restricted list of PLMNs corresponding to a "PLMN not allowed to operate at the present UE location" list maintained by the UE based on the PDU establishment failure message.

11. The system as claimed in claim 9 or 10, wherein the first cell corresponds to a Next Generation-Radio Access Network, NG-RAN, satellite cell and the second cell corresponds to a Radio Access Technology, RAT,-based cell different from the first cell.

12. The system as claimed in claim 9, 10, or 11, wherein the processing circuity is further configured to:
perform mobility registration using available registration context with first PLMN via a second cell of another network/a second PLMN via the first cell corresponding to the network.

13. The system as claimed in claim 9, 10, 11, or 12, wherein the processing circuity is further configured to:
perform a local deregistration with the first cell based on the PDU establishment failure message.

14. The system as claimed in claim 9, 10, 11, 12, or 13, wherein the processing circuity is further configured to:
selecting the second PLMN from among one or more PLMNs identified as a result of a PLMN selection procedure.

15. The system as claimed in claim 9, 10, 11, 12, 13, or 14, wherein the processing circuity is further configured to:
initialize a timer after the performing the local deregistration with the first cell;
perform local release of the first RRC connection in response to determining the first RRC connection has not been released by the network by expiry of the timer; and
perform PLMN selection after the performing the local release of the first RRC connection.
